# EUROPÄISCHE PATENTANMELDUNG

(11) **EP 4 567 332 A1**
(43) Veröffentlichungstag der Anmeldung: **11.06.2025**
(21) Anmeldenummer: 24216150.3
(22) Anmeldetag: 28.11.2024
(51) Int. Cl.: F24C 7/08, G05G 1/10, H01H 19/02

(54) **BEDIENEINRICHTUNG FÜR EIN ELEKTROGERÄT UND ELEKTROGERÄT**

(30) Priorität: 04.12.2023 DE 102023133859
(71) Anmelder: E.G.O. Elektro-Gerätebau GmbH, 75038 Oberderdingen (DE)
(72) Erfinder: Abendschön, Robin, 75031 Eppingen (DE); Marx, Achim, 75038 Oberderdingen (DE); Fucik, Tilo, 75045 Walzbachtal (DE); Grafmüller, Kevin, 75015 Bretten (DE)
(74) Vertreter: Patentanwälte Ruff, Wilhelm, Beier, Dauster & Partner mbB

(57) **Zusammenfassung**

Eine Bedieneinrichtung für ein Elektrogerät wie einen Backofen weist eine Bedienblende mit einer Vorderseite und mit einer Rückseite auf und ein Drehbediengerät an der Rückseite der Blende, das eine Drehwelle aufweist, die durch eine Blendenöffnung über die Vorderseite der Bedienblende übersteht und dort einen Bedienknebel trägt. Das Drehbediengerät weist eine Lichtquelle auf, wobei in der Blendenöffnung eine ringförmige Lichtleiteinrichtung angeordnet ist, die bis hinter die Blendenöffnung hin zu der Lichtquelle reicht. Die Lichtleiteinrichtung besteht aus lichtleitendem Material und umgibt die Drehwelle vollständig. In dem Bedienknebel sind Leuchtbereiche aus lichtleitendem Material vorgesehen, die von einer Rückseite des Bedienknebels nahe der Lichtleiteinrichtung zu einer Lateralseite und/oder Vorderseite des Bedienknebels verlaufen. So kann Licht einfach durch die Bedienblende an den Bedienknebel gebracht werden.

## Beschreibung

### Anwendungsgebiet und Stand der Technik

Die Erfindung betrifft eine Bedieneinrichtung für ein Elektrogerät, beispielsweise einen Backofen. Des Weiteren betrifft die Erfindung ein Elektrogerät oder einen Backofen mit einer solchen Bedieneinrichtung.

Die Bedieneinrichtung weist eine Bedienblende und ein Drehbediengerät dahinter auf, auf dessen Drehwelle ein vorne an der Bedienblende angeordneter Bedienknebel sitzt. Damit kann das Drehbediengerät bedient werden, um beispielsweise eine Leistungsstufe oder eine Temperatur für eine Heizeinrichtung oder eine Betriebsart wie beispielsweise eine Beheizungsart eines Backofens einstellen zu können.

Aus der EP 1 349 281 A2 sind Bedieneinrichtungen bekannt mit einem drehbaren Bedienknebel, in dem selbst eine Leuchtanzeige angeordnet ist. Dies wird als sehr aufwändig angesehen.

Aus der EP 2 251 762 A2 sind Bedieneinrichtungen bekannt mit einem drehbaren Bedienknebel, bei denen Licht durch die Bedienblende in den Bedienknebel hinein und durch diesen hindurchgestrahlt werden kann. So ist vorne am Bedienknebel eine Leuchtanzeige und/oder Beleuchtung möglich.

### Aufgabe und Lösung

Der Erfindung liegt die Aufgabe zugrunde, eine eingangs genannte Bedieneinrichtung sowie ein damit versehenes Elektrogerät zu schaffen, mit denen Probleme des Standes der Technik gelöst werden können und es insbesondere möglich ist, einen Leuchteffekt oder eine Beleuchtung an einem Bedienknebel eines Drehbediengeräts zur Verfügung zu haben, ohne dass dies großen konstruktiven Aufwand oder Montageaufwand beim Zusammenbau der Bedieneinrichtung bedeutet.

Gelöst wird diese Aufgabe durch eine Bedieneinrichtung mit den Merkmalen des Anspruchs 1 sowie durch ein Elektrogerät mit den Merkmalen des Anspruchs 15. Vorteilhafte sowie bevorzugte Ausgestaltungen der Erfindung sind Gegenstand der weiteren Ansprüche und werden im Folgenden näher erläutert. Dabei werden manche der Merkmale nur für die Bedieneinrichtung oder nur für ein damit versehenes Elektrogerät genannt. Sie sollen jedoch unabhängig davon sowohl für eine solche Bedieneinrichtung als auch für ein solches Elektrogerät selbständig und unabhängig voneinander gelten können. Der Wortlaut der Ansprüche wird durch ausdrückliche Bezugnahme zum Inhalt der Beschreibung gemacht.

Die Bedieneinrichtung weist eine Bedienblende auf, welche wiederum eine Vorderseite und eine Rückseite aufweist. Des Weiteren weist die Bedieneinrichtung ein genanntes Drehbediengerät auf, das hinter oder an der Rückseite der Bedienblende angeordnet ist. Das Drehbediengerät weist eine Drehwelle auf, die durch eine Blendenöffnung als Öffnung in der Bedienblende verläuft oder hindurchragt. Vorteilhaft steht die Drehwelle über die genannte Vorderseite der Bedienblende über. Auf dieser Drehwelle ist ein Bedienknebel, der auch als Drehknebel angesehen werden kann, angeordnet bzw. aufgesteckt. Der Bedienknebel ist also an der Vorderseite der Bedienblende, und das Drehbediengerät ist dahinter. Vorteilhaft kann vorgesehen sein, dass die Bedienblende bis auf die genannte Blendenöffnung, durch welche die Drehwelle verläuft, lichtundurchlässig ausgebildet ist. Hierfür kann entweder entsprechendes lichtundurchlässiges Material für die Bedienblende vorgesehen sein, beispielsweise Metall oder eingefärbter Kunststoff. Alternativ kann dies mit einer Beschichtung, Folie odgl. an der Rückseite oder an der Vorderseite erreicht werden.

Erfindungsgemäß weist das Drehbediengerät eine Lichtquelle auf, vorteilhaft in Form einer LED. Eine solche Lichtquelle des Drehbediengeräts ist vorzugsweise an einem Bereich des Drehbediengeräts vorgesehen, der zu der Rückseite der Bedienblende weist. So kann ein Lichtweg von der Lichtquelle zum Bedienknebel möglichst gering sein. Des Weiteren ist in der Blendenöffnung eine Lichtleiteinrichtung angeordnet, die zumindest hinten an der Bedienblende ist bzw. die bis hinter die Blendenöffnung reicht hin zu der Lichtquelle oder in Richtung auf diese Lichtquelle zu, vorzugsweise bis auf einen geringen Abstand dazu an die Lichtquelle heran. Die Lichtleiteinrichtung weist festes lichtleitendes Material auf, besteht also nicht nur aus Luft bzw. einer Luftstrecke. Durch derartiges festes lichtleitendes Material kann das Licht innerhalb der Lichtleiteinrichtung möglichst genau und verlustarm geleitet werden für eine möglichst gute Beleuchtung oder Leuchtanzeige. Die Lichtleiteinrichtung umgibt dabei die Drehwelle zumindest teilweise, wobei sie sie vorteilhaft vollständig umgibt. Dann kann die Lichtleiteinrichtung ringförmig ausgebildet sein und um die Drehwelle herum verlaufen, zumindest innerhalb der Blendenöffnung. Dabei kann zwar vorgesehen sein, dass die Drehwelle an der Lichtleiteinrichtung anliegt, diese also eine Art Drehlager für die Drehwelle in der Blendenöffnung bildet. Vorteilhaft ist aber ein geringer Abstand vorgesehen. Die Lichtleiteinrichtung nutzt also dieselbe Öffnung, durch welche die Drehwelle durch die Bedienblende verläuft. In dem Bedienknebel wiederum sind Leuchtbereiche vorgesehen, die aus lichtleitendem Material bestehen, vorzugsweise mit denselben Erwägungen wie zuvor, also nicht nur aus Luft bzw. aus einer Luftstrecke bestehen. Insbesondere sollten diese Leuchtbereiche sich in die Kontur des Bedienknebels bzw. seiner Außenseite oder Oberfläche gut einfügen für ein ansprechendes optisches Erscheinungsbild. Diese Leuchtbereiche aus lichtleitendem Material verlaufen von einer Rückseite des Bedienknebels, die zur Bedienblende hin weist, zu einer Lateralseite oder Außenseite des Bedienknebels, alternativ oder zusätzlich zu einer Vorderseite des Bedienknebels. Vorzugsweise reichen diese Leuchtbereiche bis nahe an die genannte Lichtleiteinrichtung, die das Licht von der Lichtquelle des Drehbediengeräts zumindest bis in die Blendenöffnung leitet. Somit dient die Lichtleiteinrichtung sozusagen zur Überbrückung oder zur Durchquerung der Bedienblende, während vor der oder an der Bedienblende das Licht sozusagen in die Leuchtbereiche im Bedienknebel eingestrahlt wird und dann an deren Austritten an der genannten Lateralseite oder Vorderseite herausstrahlt, so dass es für eine Bedienperson sichtbar ist.

Durch die genannte Ausbildung der Lichtleiteinrichtung und deren Anordnung in derselben Blendenöffnung, durch welche die Drehwelle für den Bedienknebel verläuft, kann eine einfache und praxistaugliche Möglichkeit geschaffen werden, einen Bedienknebel zu beleuchten bzw. mit einer Leuchtanzeige zu versehen. Dabei leitet die Drehwelle selbst das Licht nicht. Dadurch, dass die mindestens eine Lichtquelle am Drehbediengerät vorgesehen ist, welches ohnehin an der Bedienblende bzw. dahinter zu befestigen ist, wird auch kein erhöhter Montageaufwand zumindest bei der Fertigmontage der Bedieneinrichtung bewirkt. Ein vorteilhaft verwendetes Drehbediengerät weist ohnehin einen elektrischen Anschluss und Zuleitungen sowie Möglichkeiten zur mechanischen Befestigung auf.

In vorteilhafter Ausgestaltung der Erfindung weist die Blendenöffnung einen Durchmesser auf, der zwischen 10% und 100% größer ist als der maximale Durchmesser der Drehwelle. Dieser sich ergebende Zwischenraum wird für die Lichtleiteinrichtung genutzt. Dabei kann vorgesehen sein, dass die Drehwelle mit ihrer Drehachse durch den Mittelpunkt der Blendenöffnung verläuft, wobei die Blendenöffnung dann kreisrund ausgebildet sein sollte. Darin ist die Drehwelle konzentrisch angeordnet, so dass vorteilhaft vorgesehen sein kann, dass sie zumindest innerhalb der Blendenöffnung gleichbleibende Dicke aufweisen kann. Dies gilt vor allem für eine ringförmig ausgebildete Lichtleiteinrichtung.

In weiterer Ausgestaltung der Erfindung kann vorgesehen sein, dass die Lichtleiteinrichtung nicht oder nur maximal 5 mm über die Vorderseite der Bedienblende übersteht. Steht sie gar nicht über, so wird keine Einschränkung für die Ausgestaltung des Bedienknebels vorgegeben. Steht sie nur geringfügig über wie angegeben, so kann sie unter Umständen noch etwas näher an den Bedienknebel oder an dessen genannte Leuchtbereiche heranführen. Mit einem derart geringen Überstand oder ohne Überstand kann eine ggf. geforderte "Drück-Dreh-Funktion", auch bekannt als push-to-turn, am Bedienknebel bzw. an der Bedieneinrichtung erreicht werden, siehe hierzu auch die EP 977 223 A2.

Vorteilhaft ist dabei vorgesehen, dass sie in dem Fall, dass sie an der Vorderseite über die Bedienblende übersteht, nicht seitlich bzw. radial außerhalb der Blendenöffnung verläuft. Dann kann die Lichtleiteinrichtung leicht von hinten durch die Blendenöffnung gesteckt werden, wobei eine solche Montagerichtung der Montagerichtung des Drehbediengeräts entsprechen kann. Dadurch können die beiden gegebenenfalls als Baueinheit ausgebildet sein. Wenn die Lichtleiteinrichtung nicht über die Vorderseite der Bedienblende übersteht bzw. hinter dieser Vorderseite oder in der Blendenöffnung endet, so ist die Gefahr geringer, dass Licht herausstrahlt und seitlich zwischen Vorderseite und Bedienknebel herausstrahlt. Dort ist dies nicht gewünscht, sondern wird als ungewünschter und störender Lichteffekt gesehen.

In möglicher weiterer Ausbildung der Erfindung kann vorgesehen sein, dass die Lichtleiteinrichtung fest und unverdrehbar in der Blendenöffnung angeordnet ist. Dabei gilt dies vor allem für die fertig montierte und betriebsbereite Bedieneinrichtung, also insbesondere an dem Elektrogerät. Die Lichtleiteinrichtung kann in der Blendenöffnung selbst und somit an der Bedienblende befestigt sein, beispielsweise formschlüssig befestigt sein oder eingeklebt sein. Alternativ kann sie an dem Drehbediengerät befestigt sein und mit dessen fester und unverdrehbarer Befestigung an der Bedienblende auch ebenso angeordnet sein. Dies gilt insbesondere für den Fall, dass die Lichtleiteinrichtung mit dem Drehbediengerät eine Baueinheit bildet, die dann gesamthaft an der Bedieneinrichtung bzw. an der Bedienblende befestigt wird.

Wenn vorgesehen ist, dass die Lichtleiteinrichtung vollständig um die Drehwelle herumverläuft in der Blendenöffnung, so kann gleichzeitig erreicht werden, dass weniger Schmutz durch die Blendenöffnung hinter die Bedienblende gelangt. Dies könnte unter Umständen die Funktion des Drehbediengeräts verschlechtern. Zusätzlich oder auch unabhängig davon kann vorgesehen sein, dass die Lichtleiteinrichtung zwischen 50% und 95% eines Zwischenraums zwischen einem Innenrand dieser Blendenöffnung und der Drehwelle einnimmt bzw. füllt. Auch so kann eine bessere Abdichtung gegen Schmutz erreicht werden. Vorteilhaft verläuft dabei die Lichtleiteinrichtung aber auch vollständig um die Drehwelle herum bzw. vollständig entlang an dem genannten Innenrand.

In einer ersten möglichen Ausgestaltung der Erfindung kann vorgesehen sein, dass die Lichtleiteinrichtung nur aus einem bzw. nur aus einem einzigen lichtleitenden Material besteht. Dies bedeutet, dass bei Einstrahlung von Licht an einer beliebigen Stelle in die Lichtleiteinrichtung überall dieses Licht geleitet wird, aber auch keine Unterscheidung in verschiedene Bereiche möglich ist. Dies bietet sich aufgrund der einfachen Ausgestaltung an, wenn nur von einer einzigen Lichtquelle Licht eingestrahlt werden soll, oder wenn nur Licht gleichmäßig von der Lichtleiteinrichtung abgegeben werden soll an die vorgenannten lichtleitenden Bereiche des Bedienknebels. Vorteilhaft kann vorgesehen sein, dass die gesamte Lichtleiteinrichtung ein einziges Bauteil aus einem einzigen Material ist, das lichtleitend ist.

In einer anderen zweiten Ausgestaltung der Erfindung kann vorgesehen sein, dass die Lichtleiteinrichtung mehrere lichtleitende Abschnitte oder Bereiche aufweist, die voneinander getrennt sind bzw. lichtundurchlässig voneinander getrennt sind, so dass sie nicht ineinander überstrahlen. Auch dann ist die Lichtleiteinrichtung vorteilhaft ein einziges Bauteil für eine leichte Handhabbarkeit, insbesondere bei Montage des Drehbediengeräts oder der Bedieneinrichtung. Die genannten lichtleitenden Abschnitte sollten also fest miteinander verbunden sein, beispielsweise können sie durch einen einzigen Spritzvorgang als Mehrkomponentenspritzen hergestellt sein. Sie können dabei jeweils durch dünne Bereiche aus lichtundurchlässigem Kunststoff voneinander abgetrennt sein. Bevorzugt ist dabei vorgesehen, dass diese lichtleitenden Abschnitte jeweils von einem zu dem Drehbediengerät hin weisenden hinteren Bereich, in dem also das Licht von der jeweiligen Lichtquelle eingekoppelt werden kann, zu einem vorderen Bereich verlaufen. Dieser vordere Bereich weist zu dem Bedienknebel bzw. zu dessen lichtleitenden Bereichen hin. Besonders bevorzugt kann dabei vorgesehen sein, dass die lichtleitenden Abschnitte Kreisringabschnitte bzw. Kreisringsektoren bilden, möglicherweise sogar jeweils gleich groß sind. Sie sind dann durch lichtundurchlässige Trennungen getrennt, insbesondere gebildet durch Beschichtungen oder dünne Bereiche aus lichtundurchlässigem Kunststoff oder anderem, entsprechend geeignetem Material.

Für die Form einer erfindungsgemäßen Lichtleiteinrichtung kann vorgesehen sein, dass sie eine Art Hülse mit nach außen abstehendem Kragen ist. Der dünnere Hülsenbereich kann in die Blendenöffnung eingesteckt sein. An seiner Stirnseite kann Licht austreten und in die lichtleitenden Bereiche im Bedienknebel und aus diesem vorne oder seitlich austreten bzw. herausstrahlen. Durch die verbreiterten und nach außen abstehenden Bereiche des Kragens ist es möglich, dass eine Lichtquelle einen etwas größeren Abstand zu der Drehwelle aufweist, was die Anordnung der Lichtquelle erleichtert.

Vorteilhaft ist an dem Drehbediengerät mindestens eine Lichtquelle angeordnet, wobei vorzugsweise mehrere Lichtquellen daran angeordnet sind. Diese können um die Drehwelle herum verteilt sein, was dazu dienen kann, entweder gemeinsam gleichmäßiger in die Lichtleiteinrichtung Licht einzustrahlen oder aber um in verschiedene, vorgenannte lichtleitende Abschnitte, die gegeneinander abgetrennt sind, unterschiedlich Licht einzuleiten. Jedenfalls ist es vorteilhaft, wenn die Lichtleiteinrichtung bis nahe an die mindestens eine oder an alle Lichtquellen reicht. Ein Abstand kann insbesondere zwischen 0,1 mm und 5 mm betragen, so dass kein direkter Kontakt gegeben ist, der eines der beiden Teile beschädigen oder verkratzen könnte. Bei einer Ausgestaltung der Erfindung können beispielsweise vier Lichtquellen gleichmäßig um die Drehwelle herum am Drehbediengerät angeordnet sein.

Vorteilhaft kann das Drehbediengerät die mindestens eine Lichtquelle gegen bzw. in das Innere der Bedieneinrichtung bzw. des sie aufweisenden Elektrogeräts abdecken oder überdecken bzw. abschirmen. Dies sollte so sein, dass das Drehbediengerät zwischen der Lichtquelle und dem Inneren der Bedieneinrichtung bzw. dem Inneren des Elektrogeräts angeordnet ist. Zusätzlich oder alternativ kann die mindestens eine Lichtquelle zwischen dem Drehbediengerät und der Bedienblende angeordnet sein. So kann die Lichtquelle im möglichst kühlen Bereich, also zwischen Bedienblende und Drehbediengerät, angeordnet sein. Übliche mechanische Steuerungen, wie sie für Drehbediengeräte verwendet werden, sind in der Regel für Temperaturen von T125 oder sogar für T150 ausgelegt. Elektronik wie die Lichtquellen oder eine Ansteuerung dafür, beispielsweise auf einem Bauteilträger bzw. einer Leiterplatte, ist in der Regel nur für T105 ausgelegt, so dass der Einbau möglichst weit weg von der Hitzequelle vorteilhaft ist. Eine Anordnung der Lichtquellen oder einer Ansteuerung dafür möglichst nahe an der Bedienblende kann zusätzlich zur Abschirmung für eine nochmals bessere Kühlung sorgen, da die Bedienblende eine Art Kühlkörper darstellt.

Für eine Anordnung der mindestens einen Lichtquelle, insbesondere auch für deren Stromversorgung, ist vorteilhaft ein flacher Bauteilträger vorgesehen, der insbesondere als Leiterplatte ausgebildet sein kann. So kann eine Lichtquelle beispielsweise als SMD-Bauteil ausgebildet und an entsprechenden Kontaktfeldern samt Leiterbahnen auf dem Bauteilträger befestigt sein sowie elektrisch angeschlossen sein. Dazu wird nachfolgend noch mehr ausgeführt.

Ein solcher flacher Bauteilträger kann vorne an dem Drehbediengerät angeordnet bzw. befestigt sein, insbesondere hin zu der Bedienblende bzw. zwischen Bedienblende und Drehbediengerät angeordnet sein. Dabei kann der Bauteilträger außen am Gehäuse bzw. außerhalb des Gehäuses des Drehbediengeräts angeordnet sein, wobei die mindestens eine Lichtquelle an der zur Bedienblende hinweisenden Seite des Bauteilträgers angeordnet ist.

Bevorzugt kann der Bauteilträger direkt an dem Drehbediengerät befestigt sein und mit diesem eine Baueinheit bilden. Dazu kann er mittels eines ihn von vorne übergreifenden Halteteils an dem Drehbediengerät bzw. an dessen Gehäuse befestigt sein, beispielsweise festgerastet sein. Dann liegt der Bauteilträger zwischen dem genannten Halteteil und dem Drehbediengerät bzw. dessen Gehäuse. Besonders bevorzugt kann das Halteteil an gegenüberliegenden Lateralseiten des Drehbediengeräts bzw. seines Gehäuses befestigt sein, vorteilhaft einfach lösbar und werkzeugfrei, beispielsweise durch eine Rastverbindung. Das Halteteil kann einen flächigen Halteabschnitt aufweisen, der den Bauteilträger gegen das Drehbediengerät bzw. dessen Vorderseite derart drückt, dass der Halteabschnitt zwischen Bauteilträger und Rückseite der Bedienblende liegt. Der Halteabschnitt kann mit seiner Fläche bevorzugt die Lichtquelle hin zur Bedienblende bzw. deren Rückseite abschirmen. So kann ein unerwünschtes Herausleuchten verhindert werden. Die Lichtleiteinrichtung kann mit einem Abschnitt zwischen Lichtquelle und Halteabschnitt verlaufen, damit hier das Licht von der Lichtquelle eingekoppelt wird.

Vorteilhaft ist vorgesehen, dass die Lichtleiteinrichtung durch das Halteteil und insbesondere durch den genannten flächigen Halteabschnitt hindurch verläuft. Insbesondere durchstößt die Drehwelle auch das Halteteil bzw. den Halteabschnitt, und auch hier kann die Lichtleiteinrichtung hindurchverlaufen. Hinter dem Halteabschnitt bzw. zwischen Halteabschnitt und Bauteilträger kann sie bis zu der Lichtquelle bzw. bis zu allen Lichtquellen verlaufen. Es kann des Weiteren vorgesehen sein, dass die Lichtleiteinrichtung positionsgetreu und insbesondere formschlüssig in einer genannten Durchgangsöffnung in dem Halteabschnitt angeordnet ist bzw. gehalten sein kann. Vor allem kann sie auch verdrehsicher in der Durchgangsöffnung gehalten werden, was vor allem für den Fall von Bedeutung ist, dass die Lichtleiteinrichtung aus mehreren, voneinander getrennten lichtleitenden Abschnitten besteht, wie es vorstehend erläutert worden ist.

So ist es möglich, dass vorne am Drehbediengerät der Bauteilträger sitzt, insbesondere gegen die Vorderseite des Drehbediengeräts angedrückt ist. Dieses Andrücken kann durch das genannte Halteteil erreicht werden, wobei entweder das Halteteil direkt gegen den Bauteilträger drückt oder aber ein dazwischen greifender Bereich der Lichtleiteinrichtung vorgesehen ist, welche von dem Halteteil gegen den Bauteilträger gedrückt wird. Das Halteteil wiederum ist einerseits an dem Drehbediengerät bzw. dessen Gehäuse befestigt, vorzugsweise angerastet. Das Halteteil kann andererseits an der Bedienblende befestigt werden, beispielsweise angeschraubt werden. Somit kann das Halteteil nicht nur den Bauteilträger und gegebenenfalls auch die Lichtleiteinrichtung halten, sondern zur Befestigung des Drehbediengeräts in der Bedieneinrichtung verwendet werden. Die genannten Teile Drehbediengerät, Bauteilträger, Lichtleiteinrichtung und Halteteil können eine fertige Baueinheit bilden, die dann vormontiert an der Bedieneinrichtung bzw. der Bedienblende befestigt werden kann bei deren Montage.

Vorteilhaft können zwei bis sechs Lichtquellen an dem Bauteilträger angeordnet sein. Dies erfolgt besonders vorteilhaft gleichmäßig zueinander und mit gleichem Abstand zur Drehwelle.

Dieser Abstand kann bevorzugt zwischen 2 mm und 8 mm liegen für eine ausreichend gute Abschirmung, beispielsweise durch das vorgenannte Halteteil.

In vorteilhafter Ausgestaltung der Erfindung kann an dem Bauteilträger eine elektrische Kontakteinrichtung angeordnet oder vorgesehen sein, insbesondere um die Lichtquellen anzusteuern bzw. mit Strom zu versorgen. Eine solche Kontakteinrichtung ist bevorzugt an einer Außenseite oder Außenkante des Bauteilträgers vorgesehen, da sie hier leicht erreichbar ist. Eine solche elektrische Kontakteinrichtung kann für einen Steckkontakt ausgebildet sein. So kann sie beispielsweise Kontaktfelder auf dem Bauteilträger aufweisen, an bzw. auf die ein Kontaktstecker aufgesteckt werden kann, so dass er diese Kontaktfelder übergreift. Dann ist ein Kontakt sehr einfach herstellbar, und auch die Kontakteinrichtung benötigt keinen großen Aufwand. Wenn der Bauteilträger ohnehin Leiterbahnen und Kontaktfelder aufweist, können so auch die genannten Kontaktfelder für einen Steckkontakt leicht hergestellt werden.

In einer Weiterbildung der Erfindung kann vorgesehen sein, dass auf dem Bauteilträger auch ein Mikrocontroller angeordnet ist. Dieser kann zur Ansteuerung der mindestens einen Lichtquelle dienen. Möglicherweise können auch weitere Bauteile darauf angeordnet sein, die zwar vorteilhaft zur Ansteuerung der Lichtquellen dienen können wie beispielsweise Vorwiderstände odgl.. Dies muss aber nicht sein. Es kann durch den zusätzlich zu dem Drehbediengerät angeordneten Bauteilträger auch erreicht werden, dass zusätzliche Funktionen geschaffen werden können, die das Drehbediengerät an sich noch nicht aufweist. So kann ein vorhandenes Drehbediengerät genutzt werden und mit zusätzlichen weiteren Funktionen versehen werden.

Um eine möglichst vorteilhafte Baueinheit von Drehbediengerät und Bauteilträger zu erreichen, kann vorgesehen sein, dass der Bauteilträger bereits unverlierbar an dem Halteteil befestigt ist. So kann er dabei beispielsweise festgerastet oder festgeklemmt sein. Dabei können die beiden Teile an sich und zwischen sich die Lichtleiteinrichtung halten und mit dieser zusammen eine Baueinheit bilden. Diese kann dann wiederum an dem Drehbediengerät befestigt werden, beispielsweise angerastet werden wie zuvor beschrieben, um eine nochmals weitere Baueinheit zu bilden. Dabei kann auch vorgesehen sein, dass das Halteteil aus Kunststoff besteht, was vorteilhaft ist, wenn an dem Bauteilträger bzw. an dessen Seite zum Halteteil hin Kontaktfelder und/oder Leiterbahnen vorgesehen sind. Alternativ kann das Halteteil auch aus dünnem Metall bestehen und zumindest zur Vorderseite des Bauteilträgers hin einen gewissen Abstand zur elektrischen Isolierung aufweisen.

Seitenkanten des Bauteilträgers, die frei sind von elektrisch leitenden Bereichen, können zwischen abstehenden Abschnitten des Halteteils, mittels derer es beispielsweise an dem Gehäuse des Drehbediengeräts angerastet werden kann, gehalten sein, insbesondere eingeklemmt sein. Dies kann auch eine positionsgetreue Befestigung sein. Der Bauteilträger kann an dem Halteteil mittels Rasten, Kleben oder Durchnieten befestigt sein.

In vorteilhafter Ausführung der Erfindung weist der Bauteilträger nicht nur einen gewissen Abstand zu dem Halteteil selbst auf, wie zuvor dargelegt worden ist, sondern auch zu dem Drehbediengerät bzw. dessen Vorderseite. So ist ein ausreichender Abstand für Bauteile, Kontakte odgl. erreicht. Es kann lediglich vorgesehen sein, dass an der Vorderseite des Drehbediengeräts, insbesondere eine daraus hervorstehende Drehwelle umgebend, ein hülsenartiger Vorsprung vorgesehen ist, an welchem der Bauteilträger abgestützt und/oder positioniert sein kann. Ein genannter Abstand kann zwischen 0,5 mm und 5 mm betragen.

Eine vorteilhafte Befestigung des Drehbediengeräts an der Bedienblende kann mittels einer Schraubverbindung bzw. mit mindestens einer Schraube erfolgen. Diese kann von der Vorderseite der Bedienblende durch eine Schraubenöffnung darin hindurchverlaufen und in ein Gewinde am Drehbediengerät bzw. an einer Baueinheit mit dem Drehbediengerät eingreifen. Insbesondere kann eine solche Schraube auch durch den Bauteilträger verlaufen, allerdings ohne mit diesem mittels eines Gewindes verbunden zu sein. Ein Gewinde für die Schraube kann insbesondere an dem genannten Halteteil bzw. an dessen flächigem Halteabschnitt vorgesehen sein. So kann dieser auch zur Befestigung des gesamten Drehbediengeräts verwendet werden. Alternativ kann an der Vorderseite des Drehbediengeräts ein Gewinde für die Schraube vorgesehen sein, so dass das Halteteil dann nur den Bauteilträger an dem Drehbediengerät fixiert.

Für ein erfindungsgemäßes Elektrogerät ist mindestens eine solche Bedieneinrichtung vorgesehen. Diese bzw. deren Bedienblende ist an einer Außenseite des Elektrogeräts angeordnet, welches vorzugsweise eine Oberseite oder eine Vorderseite des Elektrogeräts ist. Eine Bedienblende kann dann entweder durch eine Oberseite eines Gehäuses oder eine Vorderseite eines Gehäuses des Elektrogeräts gebildet sein. Alternativ kann sie in diese Seiten eines Gehäuses als separate Oberfläche eingesetzt sein.

Für die Weiterleitung des Lichts in dem Bedienknebel gibt es zahlreiche Möglichkeiten, die an sich aus dem Stand der Technik bekannt sind. Das Licht kommt eben von der Lichtleiteinrichtung nahe der Drehwelle an dem Bedienknebel an und kann dann entsprechend weitergeleitet werden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in ZwischenÜberschriften und einzelne Abschnitte beschränkt die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine Schnittdarstellung durch einen erfindungsgemäßen Backofen mit einer erfindungsgemäßen Bedieneinrichtung mit Drehbediengerät hinter einer Bedienblende, Drehknebel vor der Bedienblende und einem Lichtleitring in einer Blendenöffnung,
- Fig. 2: eine sehr vereinfachte Darstellung eines Drehbediengeräts mit Leiterplatte, LED darauf und Lichtleitring um eine Drehwelle,
- Fig. 3: eine Draufsicht von vorne auf das Drehbediengerät aus Fig. 2,
- Fig. 4: eine detaillierte Schrägansicht eines Lichtleitrings,
- Fig. 5: eine detaillierte Schrägansicht einer Leiterplatte mit vier LED darauf,
- Fig. 6: eine detaillierte Schrägansicht eines Halteteils für die Leiterplatte aus Fig. 5, und
- Fig. 7: eine detaillierte Schrägansicht eines Drehbediengeräts entsprechend Fig. 1, an dessen Vorderseite das Halteteil mit Lichtleitring und Leiterplatte angeordnet ist.

### Detaillierte Beschreibung der Ausführungsbeispiele

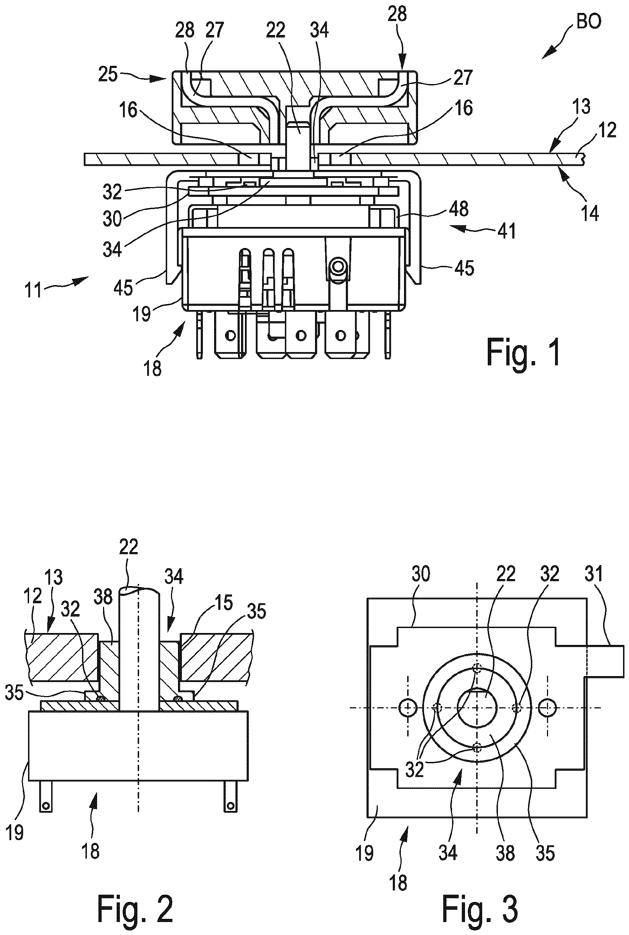

In der Fig. 1 ist ein Ausschnitt eines Backofens BO gemäß der Erfindung dargestellt, an dessen Frontblende, vorteilhaft oberhalb einer Backofentür, eine Bedienblende 12 angeordnet ist. Die Bedienblende 12 weist eine Vorderseite 13 und eine Rückseite 14 auf. Sie kann aus Glas, Metall oder Kunststoff bestehen. Des Weiteren ist an dieser Bedienblende 12 eine Bedieneinrichtung 11 vorgesehen, hier für eine Drehbedienung. Dazu weist die Bedieneinrichtung 11 ein Drehbediengerät 18 auf mit einem Gerätegehäuse 19. In dem Drehbediengerät 18 ist vorteilhaft ein sogenannter Encoder oder Drehwertgeber angeordnet, siehe hierzu beispielsweise die US 7 076 324 B2. Er weist eine Drehwelle 22 auf, deren Drehwinkel bzw. Verdrehung erkannt und ausgewertet werden kann, um damit einen entsprechenden Bedienbefehl zu erzeugen. Neben dem Drehbediengerät 18 kann die Bedieneinrichtung 11 noch weitere Funktionseinrichtungen aufweisen, die hier nicht dargestellt sind, beispielsweise Schalter bzw. Berührschalter, Leuchtanzeigen, Displays odgl..

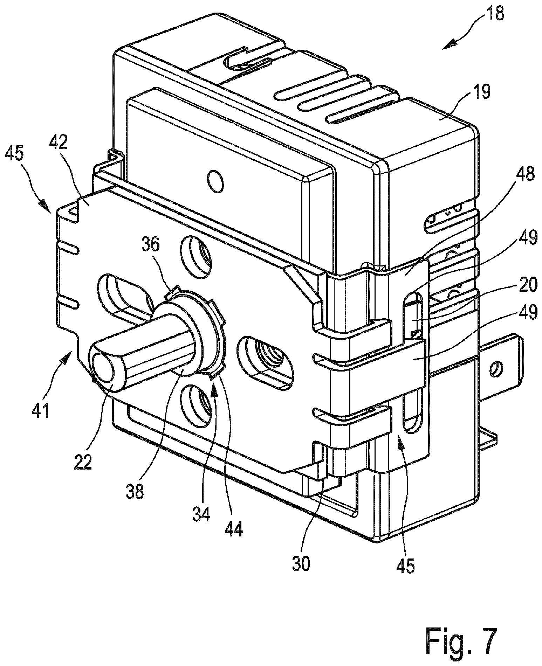

Die Drehwelle 22 verläuft durch eine Blendenöffnung 15 in der Bedienblende 12. Sie ist, wie nachfolgend die Fig. 7 noch zeigt, auf bekannte Art und Weise an einer Seite abgerundet als sogenannte D-Welle. Auf diese Drehwelle 22 ist ein Drehknebel 25 aufgesteckt, der dann von einer Bedienperson per Hand gedreht werden kann als Bedienung.

Der Drehknebel 25 weist in seinem Inneren Lichtleiter 27 auf, die von einem Zentralbereich, der hin zur Bedienblende 12 weist, ausgehen. Sie verlaufen dann radial nach außen und relativ nahe an einem Außenrand des Drehknebels 25 bis zu seiner Vorderseite, wo sie Leuchtbereiche 28 bilden. Ansonsten können die Lichtleiter 27 nicht sichtbar sein bzw. innerhalb des Drehknebels 25 verlaufen. Diese Leuchtbereiche 28 können entweder einen durchgehend umlaufenden Leuchtring bilden, alternativ Leuchtstriche, Leuchtpunkte odgl.. Hier sind vielfältige Variationen möglich, die dem Fachmann bekannt sind und leicht durchgeführt werden können. Der Lichtleiter 27 kann auch segmentiert bzw. unterteilt sein. Um das Licht in den Lichtleiter 27 einzukoppeln, ist ein erfindungsgemäßer Lichtleitring 34 vorgesehen. Er beginnt hinter der Bedienblende 12 und reicht durch die Blendenöffnung 15, wobei er nicht über die Ebene der Vorderseite 13 übersteht.

In der Fig. 2 ist das Drehbediengerät 18 mit dem Gerätegehäuse 19 in vereinfachter Darstellung von der Seite zu sehen. Vorne am Drehbediengerät 18 ist eine Leiterplatte 30 angeordnet. An ihrer von dem Drehbediengerät 18 weg weisenden Seite, die zur Bedienblende 12 hin weist, sind vier LED 32 vorgesehen. Dies zeigt auch die Vorderansicht auf das Drehbediengerät 18 aus Fig. 3. Wie zu ersehen ist, ist der Lichtleitring 34 von vorne auf die Leiterplatte 30 aufgesetzt, wobei er mit einem umlaufenden abstehenden Kragen 35 die LED 32 überragt. Von dem Kragen 35 erstreckt sich ein Ringfortsatz 38 weg vom Drehbediengerät 18, der dann in der Blendenöffnung 15 der Bedienblende 12 angeordnet ist bzw. darin steckt.

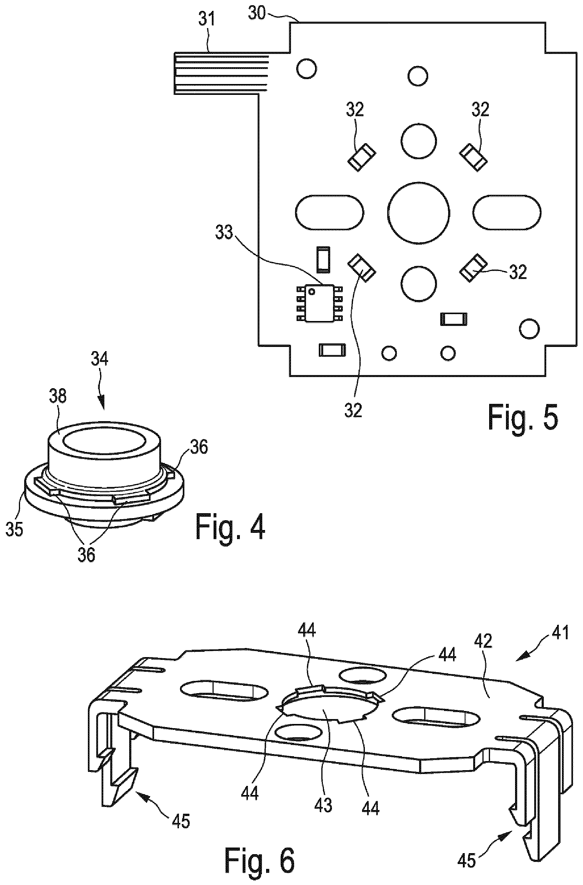

Die Fig. 4 zeigt eine detaillierte Darstellung dieses Lichtleitrings 34. Oben an dem Kragen 35 sind vier Vorsprünge 36 gleich verteilt angeordnet, über die sich der Ringfortsatz 38 erhebt. Deren Funktion wird nachfolgend noch näher erläutert. Bis auf die Vorsprünge 36 kann der Lichtleitring 34 weitgehend rotationssymmetrisch sein.

In der Fig. 5 ist eine alternative Ausgestaltung einer Leiterplatte 30 in Schrägdarstellung gezeigt. Nach oben steht von der Leiterplatte 30 ein Kontaktvorsprung 31 als Zunge oder Fahne hervor. Auf diesem Kontaktvorsprung 31 sind längliche Kontaktfelder angeordnet, die das Ende von auf der Leiterplatte 30 verlaufenden Kontaktbahnen sind. Auf den Kontaktvorsprung 31 kann auf bekannte Art und Weise ein Stecker zur elektrischen Kontaktierung aufgesteckt werden. Dabei werden die länglichen Kontaktfelder wie Steckerfahnen übergriffen und kontaktiert.

Auf der in Fig. 5 zu sehenden Oberseite der Leiterplatte 30 sind vier LED 32 um eine Öffnung herum gleichmäßig angeordnet. Durch diese Öffnung ragt die Drehwelle 22 entsprechend Fig. 2 und 3. Die LED 32 sind als SMD-Bauteile ausgebildet und somit sehr klein. Außerdem befindet sich auf der Leiterplatte 30 noch ein Mikrocontroller 33, vorteilhaft ausgebildet als IC. Dieser kann die LED 32 ansteuern mit Bedienbefehlen, die ebenso wie eine Energieversorgung über den Kontaktvorsprung 31 kommen. Bei dieser Ausgestaltung überragt der Kragen 35 des Lichtleitrings 34 die LED 32 nicht, also anders als in Fig. 2 und 3. Aber hier strahlen die LED 32 von der Seite her in den Kragen 35 ein, so dass ihr Licht ebenso in den Lichtleitring 34 geht und nach vorne in den Ringfortsatz 38 geleitet wird.

In der Fig. 6 ist ein Halteteil 41 dargestellt, mit dem der Lichtleitring 34 und die Leiterplatte 30 an dem Drehbediengerät 18 bzw. dessen Gerätegehäuse 19 angeordnet werden können, wie dies die Fig. 7 zeigt. Das Halteteil 41 weist einen großflächigen Halteabschnitt 42 auf, der eben und flach ausgebildet ist. In der Mitte weist er eine Bohrung 43 auf, durch welche die Drehwelle 22 und auch der Lichtleitring 34 mit dem Ringfortsatz 38 verlaufen. Die Bohrung 43 weist am Rand vier Ausschnitte 44 auf, die den Vorsprüngen 36 des Lichtleitrings 34 entsprechen. Wie die Fig. 7 zeigt, kann so der Lichtleitring 34 in genauer Position und unverdrehbar darin gehalten sein.

Von den beiden gegenüberliegenden Enden des länglichen Halteabschnitts 42 stehen jeweils drei Greifhaken 45 ab. Ein mittlerer Greifhaken 45 ist etwas länger und breiter, also stabiler, als die beiden äußeren. So kann das Halteteil 41 für unterschiedliche Drehbediengeräte 18 verwendet werden.

Wie die Fig. 7 zeigt, ist vorne am Drehbediengerät 18 ein Befestigungsblech 48 angeordnet bzw. befestigt. Es ist angerastet, und zwar mit länglichen Befestigungsöffnungen 49, die über einen breiten oder über mehrere Rastvorsprünge 20 an der Seite des Gerätegehäuses 19 gerastet sind. Somit ist das Befestigungsblech 48 lösbar, aber fest am Drehbediengerät 18 angeordnet. Es bildet mit diesem also eine Funktionseinheit und eine Baueinheit. Vorne auf dem Befestigungsblech 48, vorteilhaft mit etwas Abstand dazu, befindet sich die Leiterplatte 30. Dabei weist deren in Fig. 5 dargestellte Oberseite mit den vier LED 32 in Richtung weg von dem Drehbediengerät 18 bzw. dem Befestigungsblech 48. Vor der Leiterplatte 30 wiederum befindet sich das Halteteil 41, das mit den mittleren Greifhaken 45 in dieselbe Befestigungsöffnung 49 des Bedienblechs 48 greift. Dadurch ist die Leiterplatte 30 samt dem Lichtleitring 34, der mit dem Kragen 35 davorsitzt, zwischen Halteteil 41 und Befestigungsblech 48 gehalten und vorne am Drehbediengerät 18 bzw. dem Gerätegehäuse 19 angeordnet. Halteteil 41 und/oder Befestigungsblech 48 können Abstandshalter aufweisen, so dass die Leiterplatte 30 zu einem von beiden oder evtl. auch zu beiden einen gewissen Abstand aufweist, insbesondere auch zur verbesserten elektrischen Isolierung. Des Weiteren ist zu erkennen, dass in dem Halteteil 41 und entsprechend auch am Befestigungsblech 48 Löcher vorgesehen sind, die zu einem Gewinde entweder im Befestigungsblech 48 oder an der Vorderseite des Gerätegehäuses 19 führen, und zwar mit Gewinde. Hier können Schrauben durch die Schraubenöffnungen 16 in der Bedienblende 12 greifen und zur Befestigung des Drehbediengeräts 18 samt dem Vorbau entsprechend der Fig. 7 an der Bedienblende 12 dienen. Diese Schraubenöffnungen 16 samt entsprechenden Schrauben sind gemäß Fig. 1 von dem Drehknebel 25 überdeckt, was eine saubere optische Anordnung gewährleistet.

Ähnlich wie dies vorstehend für den Lichtleiter 27 im Drehknebel 25 beschrieben worden ist, kann auch der Lichtleitring 34 in zwei oder mehr Teile segmentiert sein. Dies bedeutet, dass von einer der LED 32 eingestrahltes Licht nur innerhalb des direkt dort befindlichen Segments verläuft und nicht in andere Segmente einstrahlt. Entsprechend kann dann auch vorgesehen sein, dass nur ein Segment bzw. ein segmentartiger Leuchtbereich 28 vorne am Drehknebel 25 beleuchtet wird.

## Patentansprüche

1. Bedieneinrichtung für ein Elektrogerät, insbesondere einen Backofen, wobei die Bedieneinrichtung Folgendes aufweist:
- eine Bedienblende mit einer Vorderseite und mit einer Rückseite,
- ein Drehbediengerät, das an der Rückseite der Blende angeordnet ist und eine Drehwelle aufweist, wobei die Drehwelle durch eine Blendenöffnung in der Bedienblende verläuft und über die Vorderseite der Bedienblende übersteht,
- einen Bedienknebel auf der Drehwelle, der an der Vorderseite der Bedienblende angeordnet ist,
wobei:
- das Drehbediengerät eine Lichtquelle aufweist,
- in der Blendenöffnung eine Lichtleiteinrichtung angeordnet ist, die bis hinter die Blendenöffnung reicht hin zu der Lichtquelle,
- die Lichtleiteinrichtung festes lichtleitendes Material aufweist und die Drehwelle zumindest teilweise umgibt, vorzugsweise vollständig umgibt derart, dass die Lichtleiteinrichtung ringförmig um die Drehwelle herum in der Blendenöffnung verläuft,
- in dem Bedienknebel Leuchtbereiche aus lichtleitendem Material vorgesehen sind, die von einer Rückseite des Bedienknebels nahe der Lichtleiteinrichtung zu einer Lateralseite und/oder Vorderseite des Bedienknebels verlaufen.

2. Bedieneinrichtung nach Anspruch 1, wobei die Blendenöffnung einen zwischen 10% und 100% größeren Durchmesser aufweist als der maximale Durchmesser der Drehwelle, wobei vorzugsweise die Drehwelle mit ihrer Drehachse durch den Mittelpunkt der Blendenöffnung verläuft, wobei insbesondere die Blendenöffnung kreisrund ist und Blendenöffnung und Drehwelle konzentrisch angeordnet sind.

3. Bedieneinrichtung nach Anspruch 1 oder 2, wobei die Lichtleiteinrichtung nicht oder nur maximal 5 mm über die Vorderseite der Bedienblende übersteht, vorzugsweise an der Vorderseite in einem überstehenden Bereich nicht seitlich bzw. radial außerhalb der Blendenöffnung verläuft, wobei insbesondere die Lichtleiteinrichtung nicht über die Vorderseite der Bedienblende übersteht bzw. hinter der Vorderseite bzw. in der Blendenöffnung endet.

4. Bedieneinrichtung nach einem der vorhergehenden Ansprüche, wobei die Lichtleiteinrichtung fest und unverdrehbar angeordnet ist, insbesondere an dem Drehbediengerät befestigt ist.

5. Bedieneinrichtung nach einem der vorhergehenden Ansprüche, wobei die Lichtleiteinrichtung vollständig um die Drehwelle herum verläuft in der Blendenöffnung, wobei vorzugsweise die Lichtleiteinrichtung zwischen 50% und 95% eines Zwischenraums zwischen einem Innenrand der Blendenöffnung und der Drehwelle einnimmt.

6. Bedieneinrichtung nach einem der vorhergehenden Ansprüche, wobei die Lichtleiteinrichtung aus einem einzigen lichtleitenden Material besteht.

7. Bedieneinrichtung nach einem der Ansprüche 1 bis 5, wobei die Lichtleiteinrichtung mehrere lichtleitende Abschnitte aufweist, die voneinander getrennt sind bzw. lichtundurchlässig getrennt sind, wobei die lichtleitenden Abschnitte von einem zu dem Drehbediengerät weisenden hinteren Bereich zu einem zum Bedienknebel hin weisenden vorderen Bereich verlaufen, wobei vorzugsweise die lichtleitenden Abschnitte Kreisringsektoren bilden und durch lichtundurchlässige Trennungen voneinander getrennt sind.

8. Bedieneinrichtung nach einem der vorhergehenden Ansprüche, wobei an dem Drehbediengerät mindestens eine Lichtquelle angeordnet ist und die Lichtleiteinrichtung bis nahe an diese Lichtquelle reicht, wobei das Drehbediengerät die mindestens eine Lichtquelle in das Innere der Bedieneinrichtung bzw. des sie aufweisenden Elektrogeräts abdeckt oder überdeckt bzw. abschirmt derart, dass das Drehbediengerät zwischen der Lichtquelle und dem Inneren der Bedieneinrichtung bzw. des Elektrogeräts angeordnet ist und/oder dass die mindestens eine Lichtquelle zwischen dem Drehbediengerät und der Bedienblende angeordnet ist, wobei vorzugsweise die mindestens eine Lichtquelle an einem flachen Bauteilträger angeordnet ist, der vorne an dem Drehbediengerät hin zur Bedienblende angeordnet ist, wobei insbesondere der Bauteilträger außerhalb eines Gehäuses des Drehbediengeräts und an einer zur Bedienblende hin weisenden Gehäusevorderseite angeordnet ist.

9. Bedieneinrichtung nach Anspruch 8, wobei der Bauteilträger mittels eines diesen von vorne übergreifenden Halteteils an dem Drehbediengerät bzw. an einem Gehäuse des Drehbediengeräts befestigt ist derart, dass der Bauteilträger zwischen Halteteil und Drehbediengerät ist, vorzugsweise an gegenüberliegenden Lateralseiten des Gehäuses des Drehbediengeräts befestigt ist, wobei das Halteteil einen flächigen Halteabschnitt aufweist, der zwischen Bauteilträger und Rückseite der Bedienblende angeordnet ist, wobei die Fläche des Halteabschnitts die mindestens eine Lichtquelle zur Rückseite der Bedienblende hin abschirmt bzw. direkt überdeckt, wobei insbesondere die Lichtleiteinrichtung durch das Halteteil bzw. durch den flächigen Halteabschnitt hindurch verläuft bis zu der mindestens einen dahinter angeordneten Lichtquelle, wobei vorzugsweise die Lichtleiteinrichtung positionsgetreu und formschlüssig in einer Durchgangsöffnung in dem Halteabschnitt angeordnet ist.

10. Bedieneinrichtung nach einem der Ansprüche 8 oder 9, wobei zwei bis sechs Lichtquellen an dem Bauteilträger um die Drehwelle herum angeordnet sind, vorzugsweise gleich verteilt und mit gleichem Abstand zur Drehwelle.

11. Bedieneinrichtung nach einem der Ansprüche 8 bis 10, wobei auf dem Bauteilträger ein Mikrocontroller angeordnet ist zur Ansteuerung der mindestens einen Lichtquelle.

12. Bedieneinrichtung nach einem der Ansprüche 8 bis 11, wobei an dem Bauteilträger eine elektrische Kontakteinrichtung angeordnet ist, insbesondere an einer Außenseite oder Außenkante, wobei vorzugsweise die elektrische Kontakteinrichtung Kontaktfelder aufweist, an die ein Kontaktstecker die Kontaktfelder übergreifend aufsteckbar ist.

13. Bedieneinrichtung nach einem der Ansprüche 8 bis 12, wobei der Bauteilträger unverlierbar an dem Halteteil befestigt ist, vorzugsweise zusammen mit dem Lichtleiter in deren endgültigem Montagezustand, wobei vorzugsweise das Halteteil aus Kunststoff besteht und der Bauteilträger mittels Rasten, Kleben oder durch Nieten an dem Halteteil befestigt ist.

14. Bedieneinrichtung nach einem der Ansprüche 8 bis 13, wobei der Bauteilträger einen gewissen Abstand zu der Vorderseite des Drehbediengeräts und/oder einen gewissen Abstand zur Rückseite des Halteteils aufweist als Bauraum für elektrische Anschlüsse, Bauteile auf dem Bauteilträger odgl., wobei vorzugsweise der Abstand 0,5 mm bis 5 m beträgt.

15. Elektrogerät mit mindestens einer Bedieneinrichtung nach einem der vorhergehenden Ansprüche, wobei die Bedienblende an einer Außenseite des Elektrogeräts angeordnet ist, insbesondere an einer Oberseite oder einer Vorderseite, wobei vorzugsweise die Bedienblende durch eine Oberseite eines Gehäuses oder eine Vorderseite eines Gehäuses des Elektrogeräts gebildet ist.
